# EUROPÄISCHE PATENTSCHRIFT

(11) **EP 1 350 021 B1**
(45) Veröffentlichungstag und Bekanntmachung des Hinweises auf die Patenterteilung: **28.04.2004**
(21) Anmeldenummer: 02785367.0
(22) Anmeldetag: 07.11.2002
(51) Int. Cl.: F02D 19/12, F01M 1/18

(54) **VERFAHREN ZUM BETREIBEN EINER EINRICHTUNG ZUR ENERGIEUMWANDLUNG UNTER VERWENDUNG EINES HAUPTBETRIESSTOFFES UND WENIGSTENS EINEM NEBENBETRIEBSSTOFF MIT BETANKUNGSSPERRE BEI UNTERSCHREITEN EINER MINDESTMENGE AN BETRIEBSSTOFFEN**
METHOD FOR OPERATION OF A DEVICE FOR ENERGY CONVERSION USING A MAIN FUEL AND AT LEAST ONE AUXILIARY FUEL WITH TANK CLOSURE ON DROPPING BELOW A MINIMUM AMOUNT OF FUELS
PROCEDE POUR FAIRE FONCTIONNER UN DISPOSITIF DE CONVERSION D'ENERGIE PAR UTILISATION D'UN CARBURANT PRINCIPAL ET D'AU MOINS UN CARBURANT SECONDAIRE AVEC BLOCAGE DU REMPLISSAGE EN CAS DE DEPASSEMENT D'UNE QUANTITE MINIMALE DE CARBURANTS

(30) Priorität: 14.12.2001 DE 10161449
(43) Veröffentlichungstag der Anmeldung: 08.10.2003
(73) Patentinhaber: FEV Motorentechnik GmbH, 52078 Aachen (DE)
(72) Erfinder: LEPPERHOFF, Gerhard, 52223 Stolberg (DE); PLEIMLING, Helmut, 51491 Overath (DE)
(74) Vertreter: Langmaack, Jürgen, Dipl.-Ing.
(86) Internationale Anmeldenummer: PCT/EP2002/012418
(87) Internationale Veröffentlichungsnummer: WO 2003/052251

(56) Entgegenhaltungen:
- EP-A- 1 158 148
- FR-A- 2 668 203
- FR-A- 2 790 223
- US-A- 4 445 470
- US-A- 6 068 672

## Beschreibung

Brennkraftmaschinen als Einrichtungen zur Energieumwandlung verbrauchen beim Betrieb neben dem Kraftstoff als Hauptbetriebsstoff weitere Betriebstoffe als Nebenbetriebsstoffe, wie beispielsweise Öl zur Schmierung und Wasser zur Kühlung. Der Verbrauch an Schmieröl und an Kühlwasser ist jedoch nicht unmittelbar mit dem Kraftstoffverbrauch verknüpft und in der Regel sehr gering, so daß die Auslösung eines Warnhinweises ausreicht, um zeitabhängig, bei Fahrzeugen auch wegabhängig, den Betriebstoffvorrat wieder aufzufüllen.

Bei modernen Brennkraftmaschinen, insbesondere Fahrzeugbrennkraftmaschinen, werden Hilfsaggregate verwendet, für deren Betrieb jeweils die Zufuhr eines sich verbrauchenden Nebenbetriebsstoffes benötigt wird und deren Betrieb unmittelbar mit dem Betrieb der Brennkraftmaschine verknüpft ist.

Derartige Hilfsaggregate werden beispielsweise durch Abgasbehandlungseinrichtungen zur Verringerung der Stickoxidemissionen gebildet, denen Additive für die Abgasnachbehandlung zugesetzt werden müssen, wie beispielsweise sogenannte SCR-Katalysatoren mit Zugabe an Reduktionsmitteln. Die Zufuhrmenge dieser Betriebstoffe als Nebenbetriebsstoffe ist über die jeweils zu behandelnde Abgasmenge praktisch von der verbrauchten Kraftstoffmenge als Hauptbetriebssroff abhängig.

Als Hilfsaggregat kommt beispielsweise auch eine Brennstoffzelle als autonome Energieversorgung für elektrische Nebenaggregate in Betracht, die dann beispielsweise mit Wasserstoff aus einer einzusetzenden Kartusche als Betriebsstoff versorgt wird, so daß der eingesetzte Kraftstoff nur für den Betrieb der Brennkraftmaschine verbraucht wird, während zumindest ein Teil der benötigten elektrischen Energie zum Betrieb von Nebenaggregaten durch die autonome elektrische Energieversorgung ohne Belastung der Umwelt erzeugt werden kann. Zu derartigen, über eine autonome elektrische Energieversorgung zu betreibende Nebenaggregate werden zweckmäßigerweise alle nicht unmittelbar mit dem Betrieb der Brennkraftmaschine zusammenhängenden Nebenaggregate, wie Klimaanlage, Fensterheber, Kommunikationsmittel, Servoeinrichtungen, beispielsweise zur Unterstützung der Lenkung oder der Bremsfunktion gezählt.

Der jeweils vorhandene Vorrat an Betriebsstoffen, zumindest aber das Erreichen einer Minimalmenge des Vorrats eines derartigen Betriebsstoffes wurde bisher über eine entsprechende Sensorik erfaßt und ein entsprechendes Warnsignal erzeugt.

Handelt es sich beispielsweise um eine Brennkraftmaschine mit einer Abgasnachbehandlungseinrichtung, die für eine ordnungsgemäße Funktion die Zufuhr eines sich verbrauchenden Betriebsstoffes benötigt, wie beispielsweise die Zufuhr eines Reduktionsmittels bei einem SCR-Katalysator, dann ist zwar ein Betrieb der Brennkraftmaschine auch dann noch möglich, wenn der Betriebsstoff für die Abgasnachbehandlungseinrichtung verbraucht ist. Der Nachteil ist jedoch, daß der Betrieb dann mit einer hohen, d. h. unzulässigen Stickoxidmenge im Abgas erfolgt (siehe z.B. EP-A-1158148).

Einen weiteren Anwendungsfall für eine Einrichtung zur Energieumwandlung stellt eine Brennstoffzelle dar, in der durch eine elektro-chemische Umsetzung aus einem wasserstoffhaltigen Brenngas als Hauptbetriebsstoff in der Reaktion mit einem anderen Gas, beispielsweise Luft, ein elektrischer Strom erzeugt wird. Als Nebenbetriebsstoff wird beispielsweise Wasser zur Befeuchtung des Reaktionsgases benötigt, um einen definierten Wassergehalt der Reaktionsluft einstellen zu können.

Bei der Anwendung der Brennstoffzelle als Haupt- oder als Nebenantrieb für ein Fahrzeug müssen ebenso wie bei einer Brennkraftmaschine sowohl der Hauptbetriebsstoff als auch die Nebenbetriebsstoffe jeweils in einem Tankvorrat mitgeführt werden.

Nachstehend werden Einrichtungen zur Energieumwandlung kurz als Umwandler bezeichnet, so auch die als Anwendungsbeispiel für eine Einrichtung zur Energieumwandlung genannte Brennkraftmaschine oder die als Beispiel genannte Brennstoffzelle.

Der Erfindung liegt die Aufgabe zugrunde, ein Verfahren zum Betreiben einer Einrichtung zur Energieumwandlung von wenigstens einem Hauptbetriebsstoff zu schaffen, durch das ein ordnungsgemäßer Betrieb sichergestellt wird, wenn einer oder mehrere derartiger Nebenbetriebsstoffe zur Neige gehen.

Zur Lösung der Aufgabe wird ein Verfahren zum Betreiben einer Einrichtung zur Energieumwandlung (Umwandler) mittels eines Hauptbetriebstoffes vorgeschlagen, für deren Betrieb in wenigstens einem Tank wenigstens ein Vorrat an Hauptbetriebsstoff und ein Vorrat für wenigstens einen Nebenbetriebsstoff vorgesehen ist, der für den Betrieb des Umwandlers unmittelbar und/oder für den Betrieb eines Hilfsaggregates notwendig ist, das die gestellte Aufgabe dadurch löst, daß die Vorratsmenge für den Hauptbetriebsstoff erfaßt wird, die Nebenbetriebsstoffmenge zumindest in bezug auf eine vorgegebene Minimalmenge erfaßt wird und bei Erreichen der Minimalmenge des Nebenbetriebsstoffes ein Signal erzeugt wird, durch das über eine Steuereinrichtung eine Auffüllung des Vorrats an Hauptbetriebsstoff und/oder ein Start des Umwandlers gesperrt wird und daß die Sperre nach Auffüllung des Nebenbetriebstoffvorrats wieder aufgehoben wird.

Wird während einer Betriebszeit des Umwandlers über das Hilfsaggregat aus dem Vorrat so viel Nebenbetriebsstoff abgezogen, daß eine vorgegebene Minimalmenge erreicht wird und wird danach der Umwandler stillgesetzt, dann wird durch das von der Nebenbetriebsstoffmengenerfassung ausgelöste Signal über die Steuereinrichtung beispielsweise der Start des Umwandlers gesperrt. Die Sperre wird erst wieder aufgehoben, wenn der Nebenbetriebsstoffvorrat wieder aufgefüllt ist. Bei einer Verknüpfung der Mengenerfassung für den Nebenbetriebsstoff mit der Mengenerfassung für den Hauptbetriebsstoff ist es auch möglich, eine Betankungssperre vorzusehen, die erst dann aufgehoben wird, wenn der Nebenbetriebsstoffvorrat aufgefüllt worden ist, so daß erst dann auch der Tank für den Hauptbetriebsstoff aufgefüllt werden kann.

In zweckmäßiger Ausgestaltung des erfindungsgemäßen Verfahrens ist vorgesehen, daß durch das Signal in einer Betriebssteuerung ein Steuerprogramm aktiviert wird, das nur einen leistungsbegrenzten und/oder wegbegrenzten und/oder zeitbegrenzten Mindestbetrieb zuläßt. Hierdurch ist sichergestellt, daß bei einem Unterschreiten der Minimalmenge des Nebenbetriebsstoffes der Umwandler in beschränktem Umfang noch betriebsfähig ist, was insbesondere bei einer Fahrzeugbrennkraftmaschine von Bedeutung ist. Die Leistungsbegrenzung kann bei einer Brennkraftmaschine beispielsweise durch eine Veränderung von innermotorischen Parametern, beispielsweise einer Verstellung der Einspritzeinrichtung mit dem Ziel einer Minimierung des Stickoxidausstoßes bewirkt werden. Eine Wegbegrenzung oder auch eine Zeitbegrenzung kann jeweils über die Betriebssteuerung vorgegeben werden. Besonders zweckmäßig ist es, wenn der Mindestbetrieb durch die vorhandene Restmenge des Betriebsstoffes begrenzt wird. Bei einem Fahrzeug ist ein Mindestbetrieb beispielsweise für Rangierfahrten zweckmäßig.

Ziel der beim Erreichen einer Minimalmenge des betreffenden Nebenbetriebsstoffes über die Betriebssteuerung ausgelösten Beschränkung auf einen Mindestbetrieb ist es, noch eine Funktionssicherheit in begrenztem Umfang aufrechtzuerhalten, wobei gleichwohl noch ein ordnungsgemäßer Betrieb des Umwandlers mit Unterstützung des betreffenden Hilfsaggregates erfolgen soll. Wird die vorgegebene Grenze des Mindestbetriebs erreicht, kann die Steuerung so ausgestattet werden, daß beispielsweise die Hauptbetriebsstoffzufuhr abgeschaltet wird, mit der gleichen Folge, wie bei einem vollständigen Verbrauch des Hauptbetriebsstoffvorrats, nämlich Stillstand des Umwandlers.

Wird der betreffende Nebenbetriebsstoff beispielsweise für den Betrieb einer autonomen elektrischen Energieversorgung an einem mit einer Brennkraftmaschine betriebenen Fahrzeug, beispielsweise für eine Brennstoffzelle benötigt, dann hat dies je nach Art der versorgten elektrischen Nebenaggregate, beispielsweise einer Klimaanlage nur den Nachteil einer Reduzierung des Komforts, so daß während des laufenden Betriebs nicht unmittelbar in den Betrieb der Brennkraftmaschine eingegriffen werden muß.

Dient das elektrische Nebenaggregat beispielsweise an einem mit einer Brennkraftmaschine betriebenen Fahrzeuge jedoch zur Unterstützung von Lenkung und/oder Bremse, dann wirkt sich ein Ausfall der autonomen elektrischen Energieversorgung unmittelbar auf den Betrieb des Fahrzeugs aus, so daß dann über die Steuereinrichtung in den Motorbetrieb in der Weise eingegriffen werden muß, daß beispielsweise eine Drehzahlbegrenzung aktiviert wird und somit nur eine auf die erschwerte Bedienung von Lenkung und/oder Bremse abgestimmte Fahrzeughöchstgeschwindigkeit möglich wird und auf diese Weise die Fahrsicherheit gewährleistet ist.

Zweckmäßig ist es, wenn vor dem Erreichen der vorgegebenen Minimalmenge ein Vorsignal erzeugt wird, das ein Warnsignal auslöst.

In einer weiteren Ausgestaltung des erfindungsgemäßen Verfahrens ist vorgesehen, daß die jeweils vorhandene Hauptbetriebsstoffmenge und die jeweils vorhandene Menge wenigstens eines Nebenbetriebsstoffes erfaßt wird, das sich hieraus ergebende tatsächliche Mengenverhältnis ermittelt und mit einem vorgegebenen zulässigen Bereich für das Mengenverhältnis verglichen wird und daß danach die maximal zulässige Nachfüllmenge des Hauptbetriebsstoffs und/oder des Nebenbetriebsstoffs angezeigt wird und/oder bei Unterschreitung eines vorgegebenen Verhältnisses das Sperrsignal ausgelöst wird. Das vorgegebene Mengenverhältnis kann als empirisch ermittelter bauartbedingter Wert der Steuereinrichtung und/oder der Motorsteuereinrichtung vorgegeben werden, so daß über entsprechende Rechenoperationen der Soll-Ist-Vergleich sowohl die Hauptbetriebsstoffmenge, als auch die Nebenbetriebsstoffmenge und auch ihre Verknüpfung als Mengenverhältnis angezeigt werden kann, so daß der Benutzer im Betrieb je nach den Gegebenheiten auch begrenzte Mengen nachfüllen kann.

Während die Nebenbetriebsstoffe für Nebenaggregate, beispielsweise Reduktionsmittel für Abgasnachbehandlungseinrichtungen oder Wasserstoff für die Versorgung einer Brennstoffzelle, in vorkonfektionierten Einheiten, beispielsweise in Form von Kartuschen eingesetzt werden, die jeweils für sich nicht nachfüllbar sind sondern einen vorgegebenen Vorrat enthalten, bietet diese Ausgestaltung dem Benutzer die Möglichkeit, entsprechend der Anzeige nur eine beschränkte Hauptbetriebsstoffmenge nachzufüllen.

Ist jedoch zum Zeitpunkt der Hauptbetriebsstoffnachfüllung die Nebenbetriebsstoffvorratsmenge nur geringfügig von der vorgegebenen Minimalmenge entfernt und wird dann der Hauptbetriebsstofftank vollgetankt, dann überschreitet der vorhandene Hauptbetriebsstoffvorrat mit Sicherheit die durch die noch vorhandene Nebenbetriebsstoffmenge mögliche Betriebsdauer, so daß dann das Sperrsignal ausgelöst und damit ein Start des Umwandlers nach der Betankung mit Hauptbetriebsstoff nur dann möglich ist, wenn der Nebenbetriebsstoffvorrat aufgefüllt bzw. eine neue Kartusche eingesetzt worden ist.

Die Startsperre ist in unterschiedlicher Weise möglich. Gemäß der Erfindung ist für Kraftfahrzeuge eine Möglichkeit durch eine Aktivierung der elektronischen Wegfahrsperre gegeben, d. h. trotz Betätigung durch einen ordnungsgemäßen Zündschlüssel kann der Umwandler, d. h. die Brennkraftmaschine des Fahrzeugs nicht gestartet werden. Es leuchtet allerdings ein entsprechendes Signal auf.

In einer anderen Ausgestaltung ist eine Betankungssperre möglich, beispielsweise durch eine Verriegelung der Tankbefüllungseinrichtung. Dies kann mechanisch durch einen Verriegelungsbolzen am Deckel des Tankeinfüllstutzens erfolgen oder aber durch eine Verriegelung der Tankklappe in der Karosserie.

Bei Nebenbetriebsstoffen, deren Verbrauch vom Verbrauch an Hauptbetriebsstoff abhängig ist, wie beispielsweise Reduktionsmittel für eine Abgasnachbehandlungseinrichtung, wird in der Regel die Anordnung so konzipiert, daß der Maximalvorrat an Nebenbetriebsstoff abgestimmt ist auf einen Maximalvorrat an Hauptbetriebsstoff, so daß im Prinzip davon ausgegangen werden kann, daß nach Verbrauch des durch die Tankgröße vorgegebenen Hauptbetriebsstoffvorrats auch der eingesetzte Nebenbetriebsstoff verbraucht ist, so daß praktisch bei jeder Tankfüllung auch neuer Nebenbetriebsstoff eingesetzt werden muß. Die Anordnung kann auch in der Weise abgewandelt werden, daß eine Maximalmenge an Nebenbetriebsstoff ausreicht für die n-fach Maximalmenge an Hauptbetriebsstoff, so daß beispielsweise nach zwei oder drei Tankbefüllungen mit Hauptbetriebsstoff der Nebenbetriebsstoffvorrat entsprechend ergänzt werden muß. In gleicher Weise ist es auch möglich, die Versorgung des Hilfsaggregates so vorzusehen, daß auch für die Nebenbetriebsstoffversorgung des Hilfsaggregates ein Reservevorrat vorgehalten wird und daß statt der Auslösung eines Sperrsignals nach Unterschreiten der Minimalmenge für diesen Nebenbetriebsstoff auf den Reservevorrat umgeschaltet wird.

Betriebsstoffe, und zwar sowohl Haupt- als auch Nebenbetriebsstoffe, können auch als Mischung von wenigstens zwei Stoffkomponenten eingesetzt werden, wobei die Stoffkomponenten einzeln dem Vorrat zuführbar und somit die Mischung in situ, d. h. im Vorratsbehälter herstellbar ist. Dies ist beispielsweise bei einer Harnstoff-Wasserlösung als Reduktionsmittel zur NOₓ-Reduzierung möglich. Hierfür ist es in Ausgestaltung des erfindungsgemäßen Verfahrens zweckmäßig, wenn das Mischungsverhältnis erfaßt und bei Abweichungen vom vorgegebenen Mischungsverhältnis das Sperrsignal ausgelöst wird. Damit wird ein Starten der Brennkraftmaschine unterbunden, wenn beispielsweise durch Auffüllen eines Harnstoff-Wasservorrates als Reduktionsmittel nur mit Wasser zwar die vorgegebene Vorratsmenge eingestellt wird, aber das vorgegebene Mischungsverhältnis nicht eingehalten ist. Die einwandfreie Funktion des Abgasnachbehandlungsaggregates ist somit sichergestellt, soweit diese von einer ordnungsgemäßen Nebenbetriebsstoffzugabe abhängig ist. Der vorstehende Verfahrensschritt ist jedoch nicht auf den als Beispiel angegebenen Anwendungsfall beschränkt.

Die vorstehend beschriebenen Verknüpfungen der Mengenerfassung ist nicht auf einen Nebenbetriebsstoff beschränkt. So kann beispielsweise bei einer Fahrzeugbrennkraftmaschine sowohl der für eine Abgasnachbehandlungseinrichtung erforderliche Nebenbetriebsstoff als auch der für eine autonome elektrische Energieversorgung erforderliche Nebenbetriebsstoff mit der Erfassung der Hauptbetriebsstoffmenge in der Weise verknüpft werden, daß bei Erreichen einer vorgegebenen Minimalmenge von jeweils einem der beiden Betriebsstoffe entsprechende Signale ausgelöst und die Steuereinrichtung bzw. die Motorsteuereinrichtung angesprochen wird und von dieser entsprechende Steuersignale ausgelöst werden.

Die jeweilige Mengenerfassung kann kontinuierlich erfolgen oder aber jeweils in vorgebbaren Zeitintervallen erfolgen, wobei die Mengenerfassung dann zweckmäßig gleichzeitig erfolgen sollte. Die Intervalle können hierbei veränderlich sein, so daß beispielsweise ausgehend von einer Maximalmenge für den Hauptbetriebsstoff und den bzw. die entsprechenden Nebenbetriebsstoffe die Mengenabfrage jeweils in großen zeitabhängigen oder auch wegabhängigen Intervallen erfolgt und daß mit Annäherung an eine der Minimalmengengrenze die Erfassungsintervalle verkürzt werden, um so das Erreichen der vorgegebenen Minimalmenge möglichst genau zu erfassen.

Bei gewerblich genutzten Fahrzeugen, wie beispielsweise Lastkraftwagen oder Omnibussen ist ein Fahrtenschreiber vorgeschrieben, dessen Aufzeichnungsblatt regelmäßig ausgetauscht und kontrolliert wird. Hierbei ist es dann zweckmäßig, wenn zumindest die Annäherung an die Minimalmenge von einem oder auch mehreren Betriebsstoffen auf dem Fahrtenschreiberblatt aufgezeichnet wird, so daß bei der täglichen Kontrolle des Fahrtenschreibers die Bevorratung des oder der Betriebsstoffe kontrolliert werden kann.

## Patentansprüche

1. Verfahren zum Betreiben einer Einrichtung zur Energieumwandlung eines Hauptbetriebsstoffes, insbesondere einer Fahrzeugbrennkraftmaschine und/oder einer Brennstoffzelle (Umwandler), wobei für den Betrieb der Einrichtung wenigstens ein Hauptbetriebsstoffvorrat und ein Vorrat für wenigstens einen Nebenbetriebsstoff vorgesehen ist, der für den Betrieb des Umwandlers unmittelbar und/oder für den Betrieb eines Hilfsaggregates notwendig ist, **dadurch gekennzeichnet, daß** die Hauptbetriebsstoffvorratsmenge erfaßt wird, die Nebenbetriebsstoffmenge zumindest in bezug auf eine vorgegebene Minimalmenge erfaßt wird und bei Erreichen der Minimalmenge ein Signal erzeugt wird, durch das über eine Steuereinrichtung ein Auffüllen des Hauptbetriebsstoffvorrats und/oder ein Start des Umwandlers gesperrt wird und daß die Sperre nach Auffüllung des Nebenbetriebsstoffvorrats wieder aufgehoben wird.

2. Verfahren nach Anspruch 1, **dadurch gekennzeichnet, daß** durch das Signal in einer Steuereinrichtung ein Steuerprogramm aktiviert wird, das nur einen leistungsbegrenzten und/oder wegbegrenzten und/oder zeitbegrenzten Mindestbetrieb zuläßt.

3. Verfahren nach Anspruch 1 oder 2, **dadurch gekennzeichnet, daß** der Mindestbetrieb durch die vorhandene Restmenge des Nebenbetriebsstoffs begrenzt wird.

4. Verfahren nach einem der Ansprüche 1 bis 3, **dadurch gekennzeichnet, daß** ein Vorsignal erzeugt wird, das ein Warnsignal auslöst.

5. Verfahren nach einem der Ansprüche 1 bis 4, **dadurch gekennzeichnet, daß** die jeweils vorhandene Hauptbetriebsstoffmenge und die jeweils vorhandene Menge wenigstens eines Nebenbetriebsstoffs erfaßt wird, das sich hieraus ergebende tatsächliche Mengenverhältnis ermittelt und mit einem vorgegebenen zulässigen Bereich für das Mengenverhältnis verglichen wird und daß danach die maximal zulässige Nachfüllmenge des Hauptbetriebsstoffs und/oder des Nebenbetriebsstoffs angezeigt wird und/oder bei Unterschreiten eines vorgegebenen Verhältnisses das Sperrsignal ausgelöst wird.

6. Verfahren nach einem der Ansprüche 1 bis 5, **dadurch gekennzeichnet, daß** die Startsperre durch Aktivierung eine elektronischen Wegfahrsperre bewirkt wird.

7. Verfahren nach einem der Ansprüche 1 bis 6, **dadurch gekennzeichnet, daß** bei einem Umwandler für ein Fahrzeug, insbesondere eine Brennkraftmaschine, eine Verriegelung der Tankbefüllungseinrichtung aktiviert wird.

8. Verfahren nach einem der Ansprüche 1 bis 7, **dadurch gekennzeichnet, daß** das Hilfsaggregat durch eine Abgasnachbehandlungseinrichtung gebildet wird.

9. Verfahren nach einem der Ansprüche 1 bis 8, **dadurch gekennzeichnet, daß** das Hilfsaggregat durch eine Brennstoffzelle zur autonomen elektrischen Versorgung von Zusatzeinrichtungen gebildet wird.

10. Verfahren nach einem der Ansprüche 1 bis 9, **dadurch gekennzeichnet, daß** die jeweils vorhandene Menge wenigstens eines Betriebsstoffs angezeigt und/oder aufgezeichnet wird.

11. Verfahren nach einem der Ansprüche 1 bis 10, **dadurch gekennzeichnet, daß** die Hauptbetriebsstoffvorratsmenge und/oder die Nebenbetriebsstoffvorratsmenge gleichzeitig in Intervallen erfaßt wird.

12. Verfahren nach einem der Ansprüche 1 bis 11, **dadurch gekennzeichnet, daß** bei Verwendung eines Nebenbetriebsstoffes, der aus einer Mischung von wenigstens zwei Stoffkomponenten besteht, die einzeln dem Vorrat zuführbar sind, das Mischungsverhältnis erfaßt und bei Abweichungen vom vorgegebenen Mischungsverhältnis das Sperrsignal ausgelöst wird.

## Claims

1. Method for operating a device for the energy conversion of a primary fuel, in particular of a vehicle internal combustion engine and/or of a fuel cell (converter), wherein at least one primary fuel store and a store for at least one secondary fuel are provided for the operation of the device, the latter fuel being necessary for the operation of the converter directly and/or for the operation of an auxiliary unit, **characterised in that** the primary fuel store quantity is detected, the secondary fuel quantity is detected at least in relation to a predetermined minimum quantity and, upon reaching the minimum quantity, a signal is generated through which filling-up of the primary fuel store and/or starting of the converter are/is inhibited, and that the inhibition is cancelled again after the secondary fuel store has been filled up.

2. Method according to Claim 1, **characterised in that** a control program is activated by the signal in a control device, which program only permits a power-limited and/or travel-limited and/or time-limited minimum operation.

3. Method according to Claim 1 or 2, **characterised in that** the minimum operation is limited by the existing residual quantity of secondary fuel.

4. Method according to any one of Claims 1 to 3, **characterised in that** a pre-signal is generated which triggers a warning signal.

5. Method according to any one of Claims 1 to 4, **characterised in that** the respective existing primary fuel quantity and the respective existing quantity of at least one secondary fuel are detected, the actual quantitative ratio resulting therefrom is established and compared with a predetermined permissible range for the quantitative ratio, and that the maximum permissible refill quantity of primary fuel and/or of secondary fuel are/is then indicated and/or the inhibiting signal is triggered if a predetermined ratio is not reached.

6. Method according to any one of Claims 1 to 5, **characterised in that** the starting inhibition is effected by activating an electronic immobilizer.

7. Method according to any one of Claims 1 to 6, **characterised in that**, in the case of a converter for a vehicle, in particular an internal combustion engine, a lock of the tank filling device is activated.

8. Method according to any one of Claims 1 to 7, **characterised in that** the auxiliary unit is formed by an exhaust gas aftertreatment device.

9. Method according to any one of Claims 1 to 8, **characterised in that** the auxiliary unit is formed by a fuel cell for the autonomous electrical supply of additional devices.

10. Method according to any one of Claims 1 to 9, **characterised in that** the respective existing quantity of at least one fuel is indicated and/or recorded.

11. Method according to any one of Claims 1 to 10, **characterised in that** the primary fuel store quantity and/or the secondary fuel store quantity are/is detected simultaneously at intervals.

12. Method according to any one of Claims 1 to 11, **characterised in that**, when using a secondary fuel consisting of a mixture of at least two substance components which can be supplied individually to the store, the mixture ratio is detected and the inhibiting signal is triggered in the case of deviations from the predetermined mixture ratio.

## Revendications

1. Procédé pour faire fonctionner un dispositif pour la conversion énergétique d'un carburant principal, notamment un moteur à combustion interne d'un véhicule et/ou une cellule de combustible (convertisseur), dans lequel au moins une réserve de carburant principal et une réserve pour au moins un carburant secondaire sont prévues pour le fonctionnement du dispositif, cette dernière étant nécessaire pour le fonctionnement du convertisseur directement et/ou pour le fonctionnement d'un groupe auxiliaire, ceractérisé en ce que la quantité de réserve de carburant principal est mesurée, la quantité de carburant secondaire est mesurée du moins par rapport à une quantité minimale prédéterminée et un signal est généré lorsque la quantité minimale est atteinte, ledit signal causant le blocage, par l'intermédiaire d'un dispositif de commande, d'un remplissage de la réserve de carburant principal et/ou d'un démarrage du convertisseur, et en ce que le blocage est supprimé après le remplissage de la réserve de carburant secondaire.

2. Procédé selon la revendication 1, **caractérisé en ce que** le signal cause l'activation dans un dispositif de commande d'un programme de commande ne permettant qu'un fonctionnement minimum limité au niveau de la puissance, de la course et/ou du temps.

3. Procédé selon la revendication 1 ou 2, **caractérisé en ce que** le fonctionnement minimum est limité par la quantité résiduelle présente du carburant secondaire.

4. Procédé selon l'une quelconque des revendications 1 à 3, **caractérisé en ce qu'**un signal préliminaire est généré qui déclenche un signal d'avertissement.

5. Procédé selon l'une quelconque des revendications 1 à 4, **caractérisé en ce que** la quantité de carburant principal respectivement présente et la quantité respectivement présente d'au moins un carburant secondaire sont mesurées, le rapport quantitatif réel en résultant est déterminé et comparé avec une plage admissible prédéterminée pour le rapport quantitatif, et **en ce qu'**ensuite la quantité d'appoint maximale admissible du carburant principal et/ou du carburant secondaire est indiquée et/ou le signal de blocage est déclenché en cas de dépassement vers le bas d'un rapport prédéterminé.

6. Procédé selon l'une quelconque des revendications 1 à 5, **caractérisé en ce que** le blocage de démarrage est effectué par l'activation d'un blocage de démarreur électronique.

7. Procédé selon l'une quelconque des revendications 1 à 6, **caractérisé en ce que** dans un convertisseur pour un véhicule, notamment un moteur à combustion interne, un verrouillage du dispositif de remplissage de réservoir est activé.

8. Procédé selon l'une quelconque des revendications 1 à 7, **caractérisé en ce que** le groupe auxiliaire est constitué d'un dispositif de post-traitement de gaz d'échappement.

9. Procédé selon l'une quelconque des revendications 1 à 8, **caractérisé en ce que** le groupe auxiliaire est constitué d'une cellule de combustible pour l'alimentation électrique autonome de dispositifs supplémentaires.

10. Procédé selon l'une quelconque des revendications 1 à 9, **caractérisé en ce que** la quantité respectivement présente d'au moins un carburant est indiquée et/ou enregistrée.

11. Procédé selon l'une quelconque des revendications 1 à 10, **caractérisé en ce que** la quantité de réserve de carburant principal et/ou la quantité de réserve de carburant secondaire est mesurée simultanément à intervalles.

12. Procédé selon l'une quelconque des revendications 1 à 11, **caractérisé en ce que**, dans le cas où on utilise un carburant secondaire comprenant un mélange au moins deux composants de matière qui peuvent être ajoutés individuellement à la réserve, le rapport de mélange est mesuré et le signal de blocage est déclenché en cas d'écarts par rapport au rapport de mélange prédéterminé.
